(19) Europäisches Patentamt
European Patent Office
Office européen des brevets

(11) Publication number: **0 080 817**
**B1**

(12) **EUROPEAN PATENT SPECIFICATION**

(45) Date of publication of patent specification: **10.07.85**

(51) Int. Cl.$^4$: **B 01 D 53/14**

(21) Application number: **82306017.3**

(22) Date of filing: **11.11.82**

(54) **A process for removing acid gases using a basic salt activated with a non-sterically hindered diamino compound.**

(30) Priority: **13.11.81 US 321059**
**02.12.81 US 326596**

(43) Date of publication of application:
**08.06.83 Bulletin 83/23**

(45) Publication of the grant of the patent:
**10.07.85 Bulletin 85/28**

(84) Designated Contracting States:
**DE FR GB IT NL**

(56) References cited:
**US-A-4 094 957**
**US-A-4 112 050**
**US-A-4 217 238**

(73) Proprietor: **Exxon Research and Engineering Company**
**P.O.Box 390 180 Park Avenue**
**Florham Park New Jersey 07932 (US)**

(72) Inventor: **Sartori, Guido**
**25 West Price Street**
**Linden New Jersey (US)**
Inventor: **Savage, David William**
**6 Sunset Drive**
**Summit New Jersey (US)**
Inventor: **Kim, Chang Jung**
**41 First Street**
**Somerset New Jersey (US)**
Inventor: **Melchior, Michael Thomas**
**2000 Lake Avenue**
**Scotch Plains New Jersey (US)**
Inventor: **Thaler, Warren Alan**
**133 Deerfield Lane**
**Aberdeen New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

**EP 0 080 817 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to use of a specific class of diamino compounds in admixture with an amino acid as cosolvent therefor in an aqueous absorbing solution for "hot pot" type acid gas scrubbing processes.

Recently, it was shown in U.S. Patent No. 4,112,050 that sterically hindered amines are superior to diethanolamine (DEA) as promoters for alkaline salts in the "hot pot" acid gas scrubbing process. U.S. Patent No. 4,094,957 describes an improvement to this process whereby amino acids, particularly sterically hindered amino acids, serve to prevent phase separation of the aqueous solution containing sterically hindered amines at high temperatures and low fractional conversions during the acid gas scrubbing process.

While combinations of sterically hindered diamines such as N-cyclohexyl propanediamine (CHPD) with a cosolvent such as pipecolinic acid represent preferred activator systems in U.S. Patent No. 4,094,957 for promoting hot carbonate $CO_2$ scrubbing operations, there are certain disadvantages associated therewith. One difficulty is that sterically hindered primary-secondary diamines such as CHPD are unstable in the presence of $CO_2$ and tend to enter into undesirable intramolecular condensation reactions therewith to form a cyclic urea precipitate, which reactions are catalyzed by any $H_2S$ present in the gaseous system. The side reaction of CHPD with $CO_2$ can be represented as follows:

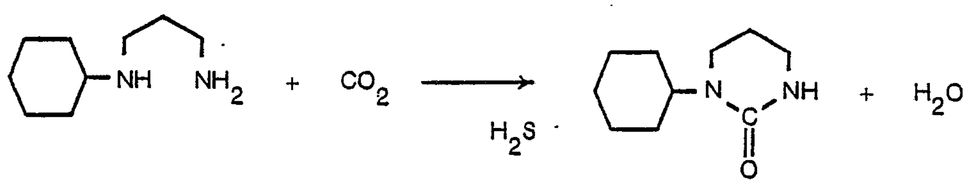


Not only is the diamine consumed by this reaction, but the insoluble cyclic urea must be removed from the system to avoid congestion of the plant operation.

It has been discovered that a certain family of non-sterically hindered diamino compounds including diamines and diaminoalcohols are stable in the presence of the gaseous mixture and, together with an amino acid cosolvent, form an amino activator system which performs effectively in hot carbonate scrubbing operations. The diaminoalcohols, characterized as containing at least one hydroxyl group and a tertiary amino group separated by four methylene groups from a primary amino group, in addition to having the above properties, are also non-volatile. Closely analogous diaminoalcohols having three methylene groups between the amino groups were found to be unstable in the presence of $CO_2$ and $H_2S$.

In one embodiment of the present invention there is provided a process for the removal of $CO_2$ from a gaseous stream containing $CO_2$ which comprises (1) in an absorption step, absorbing $CO_2$ from said gaseous stream with an aqueous absorbing solution comprising (a) a basic alkali metal salt or hydroxide selected from alkali metal bicarbonates, carbonates, hydroxides, borates, phosphates, and their mixtures, and (b) an activator or promoter system for said basic alkali metal salt or hydroxide comprising (i) at least one non-sterically hindered diamino compound which is defined as a diamine containing both a primary and a tertiary amino moiety wherein the primary amino moiety is attached to a primary carbon atom or as a diaminoalcohol containing a tertiary amino moiety separated by four methylene groups from a primary amino moiety and containing at least one hydroxyl group, and (ii) and amino acid which has the capability to increase the solubility of said diamino compound in alkaline aqueous conditions at elevated temperatures, and (2) in a desorption and regeneration step, desorbing at least a portion of the absorbed $CO_2$ from said absorbing solution.

As another embodiment of the invention there is provided an aqueous acid gas scrubbing composition comprising: (a) 10 to about 40% by weight of an alkali metal salt or hydroxide, (b) 2 to about 20% by weight of a diamino compound as specified above, (c) 2 to about 20% by weight of an amion acid which has the capability to increase the solubility of the diamine in alkaline aqueous conditions at elevated temperatures and (d) the balance, water.

The mole ratio of diamino compound to amino acid may vary widely but is preferably 1:3 to 3:1, most preferably 1:1. The amino acid may be added to the scrubbing solution containing the diamino compound all at once or in increments during the gas scrubbing operation.

The non-sterically hindered diamino compound herein is water soluble in the presence of the amino acid co-promoter and is a diamine or diaminoalcohol having the structural characteristics indicated below. The diamine has both a primary and tertiary amino moiety, provided that the primary amino moiety is attached to a primary carbon atom. A preferred diamine of the invention is a compound represented by the following general formulae:

$$H_2N(CH_2)_nNRR' \quad \text{or} \quad H_2N(CH_2)_n\overbrace{N(CH_2)_m}$$

wherein R and R′ independently represent a $C_1$—$C_6$ alkyl or a $C_6$—$C_8$ cycloalkyl group, n is an integer of at least 2, and m is an integer of at least 4. Typical such diamines include N,N-diethyl-1,3-propanediamine, N-methyl-N-butyl-1,3-propanediamine, N,N-dibutyl-1,3-propanediamine, N-methyl-N-cyclohexyl-1,3-propanediamine, N-methyl-N-cylcohexyl ethylenediamine, N-3-aminopropyl-2-pipecoline, N-(2-aminoethyl)-hexamethyleneimine, N-(3-aminopropyl)-hexamethyleneimine, and the like. Preferably, the diamine will have a cyclic tertiary amino moiety, and most preferably will be N-3-aminopropyl-2-pipecoline.

The diamino compound may also be a non-sterically hindered diaminoalcohol which has at least one hydroxyl group and a tertiary amino group separated by four methylene groups from a primary amino group. A preferred diaminoalcohol herein is represented by the following general formula:

$$H_2N—(CH_2)_4—NRR'$$

wherein R and R′ each independently represent a $C_1$—$C_6$ alkyl group and either R or R′ or both R and R′ have a terminal or pendant hydroxyl group. Typically, such diaminoalcohols inlcude N-(2-hydroxyethyl)-N-(n-propyl)-1,4-butanediamine, N-(2-hydroxyethyl)-N-(isopentyl)-1,4-butanediamine, N,N-di(2-hydroxyethyl)-1,4-butanediamine, N-(2-hydroxypropyl)-N-methyl-1,4-butanediamine, and the like. The preferred diaminoalcohols herein are those containing only one hydroxyl group, and most preferred is N-(2-hydroxyethyl)-N-(n-propyl)-1,4-butanediamine.

The amino acids herein include any amino acids which are soluble in the alkaline aqueous solution to be used in the acid gas treating solution. Preferably, the amino acid will have 4 to 8 carbon atoms per molecule and one amino moiety and will be free of any hydroxyl groups. Especially preferred within this category are tertiary amino acids, defined as amino acids wherein the amino moiety is a tertiary amino moiety such as N,N-dimethyl glyciine and N-N-diethyl glycine. Also especially preferred are sterically hindered amino acids of 4 to 8 carbon atoms per molecule defined as those containing at least one secondary amino moiety attached to either a secondary or tertiary carbon atom or a primary amino moiety attached to a tertiary carbon atom. At least one of the nitrogen atoms will have a sterically hindered structure. Typical sterically hindered amino acids useful in the practice of the present invention will include N-secondary butyl glycine, pipecolinic acid, N-isopropyl glycine, N-2-amyl glycine, N-isopropyl alanine, N-secondary butyl alanine, 2-amino-2-methyl butyric acid, and 2-amino-2-methyl valeric acid.

In general, the aqueous scrubbing solution will comprise an alkaline material comprising a basic alkali metal salt or alkali metal hydroxide selected from Group IA of the Periodic Table of Elements. More preferably, the alkali metal salt or hydroxide in the scrubbing solution is potassium or sodium borate, carbonate, hydroxide, phosphate, or bicarbonate or mixtures thereof. Most preferably, the alkaline material is potassium carbonate.

The alkaline material comprising the basic alkali metal salt or alkali metal hydroxide may be present in the scrubbing solution in the range from about 10% to about 40% by weight, preferably from 20% to about 35% by weight. The actual amount of alkaline material chosen will be such that the alkaline material and the activator or promoter system remain in solution throughout the entire cycle of absorption of $CO_2$ from the gas stream and desorption of $CO_2$ from the solution in the regeneration step. Likewise, the amount and mole ratio of the amino acid to the diamine is maintained such that they remain in solution as a single phase throughout the absorption and regeneration steps. Typically, these criteria are met by including from about 2 to about 20% by weight of the amino acid, preferably from 5 to 15% by weight, more preferably, 5 to 10% by weight of the amino acid and from 2 to about 20% by weight, preferably 5 to about 15% by weight, or non-sterically hindered diamino compound.

The aqueous scrubbing solution may include a variety of additives typically used in acid gas scrubbing processes, e.g., antifoaming agents, antioxidants, corrosion inhibitors and the like. The amount of these additives will typically be in the range that they are effective, i.e., an effective amount.

Fig. 1 is a diagrammatic flow sheet illustrating an experimental reaction apparatus for removing carbon dioxide from gaseous streams.

The term acid gas inludes $CO_2$ alone or in combination with $H_2S$, $CS_2$, HCN, COS and the oxides and sulfur derivatives of $C_1$ to $C_4$ hydrocarbons. These acid gases may be present in trace amounts within a gaseous mixture or in major proportions.

In the absorption step, the contacting of the absorbent mixture and the acid gas may take place in any suitable contacting tower. In such processes, the gaseous mixture from which the acid gases are to be removed may be brought into intimate contact with the absorbing solution using conventional means, such as a tower packed with, for example, ceramic rings or with bubble cap plates or sieve plates, or a bubble reactor.

In a preferred mode of practising the invention, the absorption step is conducted by feeding the gaseous mixture into the base of the tower while fresh absorbing solution is fed into the top. The gaseous mixture freed largely from acid gases emerges from the top. Preferably, the temperature of the absorbing solution during the absorption step is in the range from about 25 to about 200°C, and more preferably from 35 to about 150°C. Pressures may vary widely; acceptable pressures are between 0.35 and 138 bar (5 and 2000 psia), preferably 7 to 103 bar (100 to 1500 psia), and most preferably, 13.8 to 70 bar (200 to 1000 psia) in the absorber. In the desorber, the pressures will range from about 0.35 to 7 bar (5 to 100 psig). The partial pressure of the acid gas, e.g., $CO_2$, in the feed mixture will preferably be in the range from about 0.07 to 35

bar (0.1 to about 500 psia), and more preferably in the range from about 0.7 to 27.6 bar (1 to about 400 psia). The contacting takes place under conditions such that the acid gas, e.g., $CO_2$, is absorbed by the solution. Generally, the countercurrent contacting to remove the acid gas will last for a period of from 0.1 to 60 minutes, preferably 1 to 5 minutes. During absorption, the solution is maintained in a single phase. The amino acid aids in reducing foam in the contacting vessels.

The aqueous absorption solution comprising the alkaline material and the activator system of diamine and amino acid which is saturated or partially saturated with gases, such as $CO_2$ and $H_2S$, may be regenerated so that it may be recycled back to the absorber. The regeneration should also take place in a single liquid phase. Therefore, the presence of the amino acid cosolvent provides an advantage in this part of the overall acid gas scrubbing process. The regeneration or desorption is accomplished by conventional means, such as pressure reduction, which causes the acid gases to flash off by passing the solution into a tower of similar construction to that used in the absorption step, at or near the top of the tower, and passing an inert gas such as air or nitrogen or preferably steam up the tower. The temperature of the solution during the regeneration step may be the same as used in the absorption step, i.e., 25 to about 200°C, and preferably 35 to about 150°C. The absorbing solution, after being cleansed of at least a portion of the acid bodies, may be recycled back to the absorbing tower. Makeup absorbent may be added as needed. Single phase is maintained during desorption by controlling the acid gas, e.g., $CO_2$, level so that it does not fall into the region where two liquid phases form. This, of course, following the practice of the present invention, is facilitated by the use of a highly water soluble amino acid in the mixture.

As a typical example, during desorption, the acid gas (e.g., $CO_2$)-rich solution from the high pressure adsorber is sent first to a flash chamber where steam and some $CO_2$ are flashed from solution at low pressure. The amount of $CO_2$ flashed off will, in general, be about 35 to 40% of the net $CO_2$ recovered in the flash and stripper. This is increased somewhat, e.g., to 40 to 50%, with the high desorption rate promoter system owing to a closer approach to equilibrium in the flash. Solution from the flash drum is then stream stripped in the packed or plate tower, stripping steam having been generated in the reboiler in the base of the stripper. Pressure in the flash drum and stripper is usually 1.1 to about 7 bar (16 to about 100 psia), preferably 1.1 to about 2 bar (16 to about 30 psia), and the temperature is in the range from about 25 to about 200°C, preferably 35 to about 150°C, and more preferably 100 to about 140°C. Stripper and flash temperatures will, of course, depend on stripper pressure; thus at about 1.1 to 1.7 (16 to 25 psia) stripper pressures, the temperature will preferably be about 100 to about 140°C during desorption. Single phase is maintained during desorption by regulating the amount of acid gas, e.g., $CO_2$, recovered.

In the most preferred embodiment of the present invention, the acid gas, e.g., $CO_2$, is removed from a gaseous stream by means of a process which comprises, in sequential steps, (1) contacting the gaseous stream with a solution comprising 10 to about 40 weight percent, preferably 20 to about 30 weight percent, of potassium carbonate, an activator or promotor system comprising 2 to about 20 weight percent, preferably 5 to about 15 weight percent, of the diamino compound as herein defined, e.g. N-(3-amino-propyl)-2-pipecoline or N-(2-hydroxy-ethyl)-N-(n-propyl)-1,4-butanediamine, and 2 to about 20 weight percent, preferably 5 to about 15 weight percent, more preferably 5 to about 10 weight percent, of the amino acid as herein defined, e.g. pipecolinic acid, the balance of said solution being comprised of water, said contacting being conducted at conditions whereby the acid gas is absorbed in said solution, and preferably at a temperature ranging from 25 to about 200°C, more preferably from 35 to about 150°C, and a pressure ranging from 7 to about 103 bar (100 to about 1500 psia), and (2) regenerating said solution at conditions whereby said acid gas is desorbed from said solution. By practising the present invention, one can operate the process above described at conditions whereby the working capacity, which is the difference in moles of acid gas absorbed in the solution of the termination of steps (1) and (2) based on the moles of potassium carbonate originally present, is comparable to that obtained under the same operating conditions for removing acid gases from gaseous streams, wherein sterically hindered diamines or diaminoalcohols with fewer methylene groups between the amino groups are employed with an amino acid cosolvent. In other words, working capacity is defined as follows:

| | | |
|---|---|---|
| $CO_2$ in solution at completion of absorption | less | $CO_2$ in solution at completion of desorption |

Which is:

$$\frac{\text{Moles of } CO_2 \text{ Absorbed}}{\text{Initial Moles } K_2CO_3} \quad \text{less} \quad \frac{\text{Moles Residual } CO_2 \text{ Absorbed}}{\text{Initial Moles } K_2CO_3}$$

It should be noted that throughout the specification wherein working capacity is referred to, the term may be defined as the difference between $CO_2$ loading in solution at adsorption conditions (step 1) and the $CO_2$ loading in solution at regeneration conditions (step 2) each divided by the initial moles of potassium carbonate. The working capacity is equivalent to the thermodynamic cyclic capcity; that is, the loading is measured at equilibrium conditions. This working capacity may be obtained from the vapor-liquid equilibrium isotherm, that is, from the relation between the $CO_2$ pressure in the gas and the acid gas, e.g., $CO_2$

loading in the solution at equilibrium at a given temperature. To calculate thermodynamic cyclic capacity, the following parameters must usually be specified: (1) acid gas, e.g., $CO_2$, absorption pressure, (2) acid gas, e.g., $CO_2$, regeneration pressure, (3) temperature of absorption, (4) temperature of regeneration, (5) solution composition, that is, weight percent amino acid, weight percent diamino compound and weight percent of the alkaline salt or hydroxide, for example, potassium carbonate, and (6) gas composition.

Besides providing working capacities and rates of absorption and desorption which are comparable to those of the sterically hindered diamines and other diaminoalcohols useful for this purpose, the specific class of diamines herein are economical and have increased stability in the presence of $CO_2$ gas, and the specific class of diaminoalcohols herein additionally have lower volatility than many sterically hindered diamines.

Steam requirements are the major part of the energy cost of operating an acid gas, e.g., $CO_2$, scrubbing unit. Substantial reduction in energy, i.e., operating costs, will be obtained by the use of the process wherein the mixture is utilized. Additional savings from new plant investment reduction and debottlenecking of existing plants may also be obtained by the use of the mixture of the invention. The removal of acid gases such as $CO_2$ from gas mixtures is of major industrial importance, particularly the systems which utilize potassium carbonate activated by the unique activator or promoter system of the present invention.

While the sterically hindered amines, as shown in U.S. Patent No. 4,112,050, provide unique benefits in their ability to improve the working capacity in the acid scrubbing process, their efficiency may decrease in alkaline "hot pot" (hot potassium carbonate) scrubbing systems at high temperatures and at low concentrations of the acid gas due to phase separation. Therefore, full advantage of the highly effective sterically hindered amines cannot always be utilized at these operating conditions. The addition of an amine acid as a cosolvent, as shown in U.S Patent No. 4,094,957, solves the problem of phase separation and enables a more complete utilization of sterically hindered amines asd the alkaline materials activator or promoter. This result was unexpected for the reason that many stericalliy hindered amino acids (including the sterically hindered amino acid, pipecolinic acid) alone, while soluble in these alkaline systems, are not as effective as activators in acid gas scrubbing processes as the other sterically hindered amino compounds. The specific admixture, as instantly claimed and disclosed, while not employing a sterically hindered diamino compound, provides the same working capacity and/or rates of $CO_2$ adsorption as those previously reported in U.S. Patent No. 4,094,957, particularly the N-cyclohexyl 1,3-propanediamine and pipecolinic acid promoter system.

The absorbing solution of the present invention, as described above, will be comprised of a major proportion of the alkaline materials, e.g., alkali metal salts or hydroxides and a minor proportion of the amine activator system. The remainder of the solution will be comprised of water and/or other commonly used additives, such as anti-foaming agents, antioxidants, corrosion inhibitors, etc. Examples of such additives include arsenious anhydride, selenious and tellurous acid, proteins, vanadium oxides, e.g., $V_2O_3$, chromates, e.g., $K_2Cr_2O_7$, etc.

Representative non-sterically hindered diamines for use in the present invention include N,N-diethyl-1,3-propanediamine, N-methyl-N-butyl-1,3-propanediamine, N,N-dibutyl-1,3-propanediamine, N-methyl-N-cyclohexyl-1,3-propanediamine, N-methyl-N-cyclohexyl ethylenediamine, N-3-aminoproyl-2-pipercoline, N-(2-aminoethyl)-hexamethyleneimine, N-(3-aminopropyl)-hexamethyleneimine, and the like. Representative non-sterically hindered diamino-alcohols for use herein include N-(2-hydroxyethyl)-N-(n-propyl)-1,4-butanediamine, N-(2-hydroxyethyl)-N-(isopentyl)-1,4-butanediamine, N,N-di (2-hdyroxyethyl)-1,4-butanediamine, N-(2-hydroxypropyl)-N-methyl-1,4-butanediamine, and the like.

Representative amino acids applicable herein include: N,N-diethyl glycine, N,N-dimethyl glycine, pipecolinic acid, N-secondary butyl glycine, N-2-amyl glycine, N-isopropyl glycine, N-isopropyl alanine, N-secondary butyl-alpha-alanine, 2-amino-2-methyl butyric acid, and 2-amino-2-methyl valeric acid. Particularly preferred for use herein are pipecolinic acid and N-secondary butyl glycine.

The invention is illustrated further by the following examples which however, are not to be taken as limiting in any respect. All parts and percentages, unless expressly stated to be otherwise, are by weight. Examples 1—6 illustrate use of diamines and Examples 7—8 illustrate use of diaminoalcohols.

## Example 1

The reaction apparatus consists of an absorber and desorber as shown in Figure 1. The absorber is a vessel having a capacity of 2.5 liters and a diameter of 10 cm, equipped with a heating jacket and a stirrer. Pump $P_1$ removes liquid from the bottom of the reactor and feeds it back to above the liquid level through a stainless-steel sparger $S_1$. Vertical baffles further increase the contact between liquid and gas. Thermocouple T permits the reading of the temperature of the liquid. The top of the reflux condenser C is connected to a U-shaped, openended manometer M. The apparatus can be evacuated by means of pump $P_2$ through tap $T_1$. Nitrogen and $CO_2$ can be fed to the bottom of the cell through sparger $S_2$, using respectively taps $T_2$ or $T_3$. $CO_2$, coming from a cylinder, goes first through the two 12—1 flasks $F_1$ and $F_2$, acting as ballasts, then through a 3—1 wet test-meter WTM, then through bubbler $B_1$, where it is saturated with water. Hg-bubbler $B_2$ insures that no air is sucked into flask $F_2$.

Constrictions such as narrow tubings and taps have been carefully avoided in the $CO_2$ path. Tap $T_3$, which is the only one inserted in such a path, has a key with large holes (8 mm).

The desorber is a 1-liter reactor, equipped with teflon blade stirrer, gas spargers $S_1$ and $S_2$, reflux condenser C and thermocouple T.

The following reagents were put into a 2-liter Erlenmeyer flask:

55 g of N-(3-aminopropyl)-2-pipercoline
22.5 g of pipecoline acid
225.g of $K_2CO_3$
447.5 g of water

When all solids had dissolved, the mixture was put into the absorber and brought to 80°C, the stirrer being regulated at 1200 rpm. The apparatus was closed and evacuated until the liquid began to boil. The pump for the liquid was regulated so as to circulate about four liters of liquid per minute. At this near-boiling point, $CO_2$ gas was admitted into the absorber. In total, 38.7 liters of $CO_2$ were absorbed, correcting for the amount used to fill the vapor space.

The rich solution was transferred to the desorber and boiled at 105°C for one hour in a nitrogen flow, with exhaust E open and taps $T_2$ and $T_3$ closed, during which time 30 liters of $CO_2$ were desorbed. Only one liquid phase was present.

The regenerated solution so obtained was transferred back to the absorber and cooled to 80°C. The apparatus was closed and evacuated until the liquid began to boil. At this point $CO_2$ was admitted. A total of 31.5 liters of $CO_2$ was reabsorbed in 9 minutes, of which 11 liters were absorbed in the first minute. Corrected for the amount of $CO_2$ used to fill the vapor space, the volume of $CO_2$ reabsorbed was 29.5 liters.

When the experiment was repeated, replacing the N-(3-aminopropyl)-2-pipecoline and pipecolinic acid with 37.5 g of diethanolamine, only 22 liters of $CO_2$ were reabsorbed, and corrected for the $CO_2$ volume used to fill the vapor space, 20 liters were reabsorbed, of which only 4 liters were absorbed in the first minute.

## Example 2

The reaction apparatus used in this example is a 1-liter autoclave, equipped with Herculite (trademark) windows to enable observation of the contents.

A solution of the following ingedients was prepared in an Erlenmeyer flask:

44.5 g of N-(3-aminopropyl)-2-pipecoline
18.2 g of pipecolinic acid
180 g of $K_2CO_3$
357.3 g of water

A sufficient amount of solid $CO_2$ was then added to the solution to bring the mixture to one phase. The solution was then charged into the autoclave and heated to 121°C. A mixture containing 0.2% $CO_2$ and 99.8% helium gas was slowly blown through the solution at a pressure of 35 bar (50 psig). The operation was continued until the outgoing gas had the same composition as the entering gas, i.e., 0.2% $CO_2$, as determined by gas chromatography, indicating that equilibrium was reached. Only one phase was present, and the $CO_2$ content was analyzed at 10.9%.

Pure $CO_2$ gas was then blown through the solution at a total pressure of 20 bar (300 psig) until the outgoing gas had the same composition as the entering gas. The solution was clear with no precipitate present, and the $CO_2$ content was 18.8%.

When the experiment was repeated, replacing the N-(3-aminopropyl)-2-pipecoline and the pipecolinic acid with 5% of diethanolamine, the $CO_2$ content of the liquid varied only from 10.5% to 16.8%. Thus, the diamine herein exhibits not only a rate effect but also an equilibrium effect.

## Example 3

The following reagents were pout into a 2-liter Erlenmeyer flask:

50 g of N-(2-aminoethyl)-hexamethyleneimine
22.5 g of pipecolinic acid
225 g of $K_2CO_3$
452.5 g of $H_2O$

When all solids had dissolved, the mixture was put into the absorber and an absorption-desorption-reabsorption cycle was carried out as described in Example 1.

37 liters of $CO_2$ were absorbed;
26.4 liters of $CO_2$ were desorbed; and
29.5 liters of $CO_2$ were reabsorbed, of which 8 liters were reabsorbed in the first minute.

## Example 4

The following reagents were charged into a 2-liter Erlenmeyer flask:

60 g of N-methyl-N-cyclohexyl-1,3-propanediamine
22.5 g of pipecolinic acid
225 g of $K_2CO_3$
442.5 g of $H_2O$

When all solids had dissolved, the mixture was put into the absorber and an absorption-desorption-reabsorption cycle was carried out as described in Example 1.

36.2 liters of $CO_2$ were absorbed;

27.5 liters of $CO_2$ were desorbed; and

32.8 liters of $CO_2$ were reabsorbed, of which 10 liters were reabsorbed within the first minute.

Example 5

The following reagents were charged into a 2-liter Erlenmeyer flask:

55 g of N-methyl-N-cyclohexyl ethylenediamine

22.5 g of pipecolinic acid

225 g of $K_2CO_3$

447.5 g of $H_2O$

When all solids had dissolved, the mixture was put into the absorber and an absorption-desorption-reabsorption cycle was carried out as described in Example 1.

38 liters of $CO_2$ were absorbed;

28.7 liters of $CO_2$ were desorbed; and

32 liters of $CO_2$ were reabsorbed, of which 10 liters were absorbed in the first minute.

Example 6

This example illustrates the stability of the activator system of this invention as compared with the stability of an activator system containing N-cyclohexyl propanediamine, the preferred sterically hindered diamine of U.S. Pat. No. 4,094,957.

A stock solution was prepared by mixing 7.40 g of N-(3-aminopropyl)-2-pipecoline, 6.0 g of pipecolinic acid, 2.04 g of potassium bisulfide and 53.2 g of deionized water. The resulting solution had a density of 1.034 g/ml. Twelve identical 10 cc stainless steel ampoules were each charged with 3 cc of the stock solution above described and 1.835 g of potassium bicarbonate. The ampoules were then flushed with nitrogen gas, sealed, and immersed in a constant temperature bath set at 160 ± 0.2°C, whereupon each ampoule was shaken vigorously for rapid and even temperature equilibration. At pre-set times the ampoules were withdrawn, quenched in cold water and opened. A 3 cc aliquot of isopropanol solution containing a known concentration of an internal standard was added to the opened ampoule together with 2 g of potassium carbonate. The resulting mixture was shaken and stirred to induce complete extraction of the diamine into the isopropanol phase. Gas chromatographic analysis of the isopropanol layer revealed that the rate of degradation of the N-(3-aminopropyl)-2-pipecoline was about 16 times slower than the rate of degradation of N-cyclohexyl propanediamine under the same conditions.

Example 7

The following reagents were put into a 2-liter Erlenmeyer flask:

0.35 mole of the diamine compound indicated in Table 1

0.17 mole of pipecolinic acid

225 g of $K_2CO_3$

water to make 750 g of total solution

When all solids had dissolved, the mixture was put into the absorber as described in Example 1 and brought to 80°C. The apparatus was closed and evacuated until the liquid began to boil. At this point $CO_2$ gas was admitted. At the end of the absorption the rich solution was transferred to the desorber as described in Example 1 and boiled for one hour to desorb the $CO_2$ gas.

The regenerated solution so obtained was transferred back to the absorber and cooled to 80°C. The apparatus was closed and evacuated until the liquid began to boil. At this point $CO_2$ gas was admitted. The amount of time taken for the solution to reabsorb 10, 15 and 20 l of $CO_2$ gas was measured, as well as the total amount of $CO_2$ gas reabsorbed in the process, designated as capacity to reabsorb.

The rich solution containing $K_2CO_3$, diamino compound and amino acid was regenerated by boiling for an hour, and then was used for a phase-behaviour study.

About 600 g of regenerated solution were charged into a 1-liter autoclave equipped with Heculite (trademark) window, reflux condenser and inlet and outlet for gases. The autoclave was brought to 121°C while blowing a mixture containing 0.2% $CO_2$ gas and 99.8% He gas at about .2 liters/minute. When the outgoing gas had the same composition as the entering gas, equilibrium was reached. Only one phase was present in each case.

When the experiment was repeated, replacing pipecolinic acid with water, two liquid phases were present at equilibrium.

From the results of these tests, shown in Table I, it can be seen that the rates of absorption and the solubilities of all non-sterically hindered diaminoalcohols tested were comparable to the absorption rate and solubility of N-cyclohexyl propanediamine (CHPD) (the preferred sterically hindered diamine in U.S. Patent Nos. 4,094,957 and 4,112,050).

TABLE I

| Diamino Compound* | Capacity (liters of $CO_2$ reabsorbed) | Time (min: sec) to absorb indicated volume of $CO_2$ | | | Lean Solubility |
|---|---|---|---|---|---|
| | | 10 1 | 15 1 | 20 1 | |
| N-cyclohexyl propanediamine** | 30.0 | 0:53 | 1:30 | 2:21 | one phase |
| N-(n-propyl)-N-(2-hydroxyethyl)-1,3 propanediamine** | 31.6 | 0:51 | 1:25 | 2:08 | one phase |
| N-(n-butyl)-N-(2-hydroxyethyl)-1,3-propanediamine** | 32.7 | 0:56 | 1:35 | 2:19 | one phase |
| N-(n-propyl)-N-(2-hydroxyethyl)-1,4-butanediamine | 31.8 | 0:50 | 1:30 | 2:30 | one phase |

* In combination with pipecolinic acid

** Controls

Example 8

The following experiments were carried out to ascertain the stability of a diaminoalcohol herein under accelerated-simulated acid gas treating conditions.

Five standard lean solutions were prepared with the following ingredients:

7.4% by weight of the diamino compound indicated in Table II
3.0% by weight of pipecolinic acid
26.1% by weight of $KHCO_3$*
3.9% by weight of $K_2S$**
59.6% by weight of water

* represents 87% replacement of 30% $K_2CO_3$ in solution with $KHCO_3$ to simulate presence of $CO_2$ gas.
** represents 13% replacement of 30% $K_2CO_3$ in solution with $K_2S$ to simulate presence of $H_2S$ gas.

A total of 5.4 g of each of these solutions was charged separately into five 10 ml, stainless steel ampoules, which were each flushed with nitrogen gas and sealed. All of the ampoules were then immersed simultaneously into an oil bath at 140°C and monitored each day by means of gas chromatographic analysis for the amount of original diamino compound remaining in solution. Higher amounts of diamino compound indicate less conversion to by-products and thus greater stability as well as non-volatility at temperatures of 140°C. The results are given in Table II.

TABLE II

| Diamino Compound* | Days at 140°C | % of Original Diamino Compound Remaining |
|---|---|---|
| CHPD** | 7 | <10 |
| N-(n-propyl)-N-(2-hydroxyethyl)-1,3-propanediamine** | 7 | <8 |
| N-(n-propyl)-N-(2-hydroxypropyl)-1,3-propanediamine** | 2 | 66 |
| | 5 | 44 |
| | 12 | 16 |
| N-(n-propyl)-N-(3-hydroxypropyl)-1,3-propanediamine** | 2 | 20 |
| | 5 | 9 |
| N-(n-propyl)-N-(2-hydroxyethyl)-1,4-butanediamine | 2 | 80 |
| | 5 | 73 |
| | 12 | 59 |

* In combination with pipecolinic acid
** Controls

It can be seen that the diaminoalcohol of this invention, represented by the fifth diamino compound in this table, exhibited superior stability as compared not only with CHPD, but also with homologous diaminoalcohols.

In summary, the present invention is seen to provide a class of non-sterically hindered diamino compounds which perform effectively in acid gas scrubbing processes and are relatively stable to the acid gases present in the system.

**Claims**

1. A process for the removal of $CO_2$ from a gaseous stream containing $CO_2$ wherein (1) in an absorption step, $CO_2$ is absorbed from said gaseous stream with an aqueous absorbing solution comprising (a) a basic alkali metal salt or hydroxide selected from alkali metal bicarbonates, carbonates, hydroxides, borates, phosphates and their mixtures, and (b) an activator or promoter system for said basic alkali metal salt or hydroxide comprising (i) at least one non-sterically hindered diamino compound which is defined as a diamine containing both a primary and a tertiary amino moiety wherein the primary amino moiety is attached to a primary carbon atom or as a diaminoalcohol containing a tertiary amino moiety separated by four methylene groups from a primary amino moiety and containing at least one hydroxyl group, and (ii) an amino acid which has the capability to increase the solubility of said diamino compounds in alkaline aqueous conditions at elevated temperatures, and (2) in a desorption and regeneration step, at least a portion of the absorbed $CO_2$ is desorbed from said absorbing solution.

2. A process according to claim 1 wherein the aqueous solution contains 10 to about 40% by weight of said basic alkali metal salt or hydroxide, 2 to about 20% by weight of said diamino compound, and 2 to about 20% by weight of said amino acid.

3. A process according to claim 1 or 2 wherein said amino acid has 4 to 8 carbon atoms per molecule and is free of any hydroxyl groups and is either a tertiary amino acid wherein the amino moiety is a tertiary amino moiety or a sterically hindered amino acid containing at least one secondary amino moiety attached to either a secondary or tertiary carbon atom or a primary amino moiety attached to a tertiary carbon atom.

4. A process according to any one of claim 1—3 wherein said diamino compound is represented by the following general formulae:

$$H_2N(CH_2)_nNRR' \quad \text{or} \quad H_2N(CH_2)_n\widehat{N(CH_2)_m}$$

wherein R and R' independently represent a $C_1$—$C_6$ alkyl or a $C_6$—$C_8$ cycloalkyl group, n is an integer of at least 2, and m is an integer of at least 4.

5. A process according to any one of claim 1—3 wherein said diamino compound is represented by the following general formula:

$$H_2N—(CH_2)_4—NRR'$$

wherein R and R' each independently represent a $C_1$—$C_6$ alkyl group and either R or R' or both R and R' have a terminal or pendent hydroxyl group.

6. A process according to any one of claim 1—3 wherein said amino acid is pipecolinic acid or N-secondary butyl glycine, said basic alkali metal salt or hydroxide is potassium carbonate, and said diamino cmpound is N-(3-aminopropyl)-2-pipecoline, N-(2-aminoethyl)-hexamethyleneimine, N-methyl-N-cyclohexyl-1,3-propanediamine, N-methyl-N-cyclohexyl ethylenediamine or N-(2-hydroxyethyl)-N-(n-propyl)-1,4-butanediamine.

7. A process of any one of claims 1—6 wherein the temperature of the absorbing solution during the absorption step is in the range of from about 25° to about 200°C, the pressure in the absorber ranges from about 0.35 to about 138 bar (about 5 to about 2000 psia), and the partial pressure of the acid components in the feed stream ranges from about 0.07 to about 35 bar (about 0.1 to about 500 psia) and wherein the temperature of the absorbing solution during the regeneration step is in the range from about 25°C to about 200°C and at pressures ranging from about 1.1 to 7 bar (about 16 to 100 psia).

8. A process according to any one of claim 1—7 wherein the absorbing solution additionally includes one or more antifoaming agents, antioxidants or corrosion inhibitors.

9. An aqueous acid gas scrubbing composition comprising (a) 10 to about 40% by weight of an alkali metal salt or hydroxide, (b) 2 to about 20% by weight of a non-sterically hindered diamino compound which is defined as a diamine containing both a primary and a tertiary amino moiety wherein the primary amino moiety is attached to a primary carbon atom or as a diaminoalcohol containing a tertiary amino moiety separted by four methylene groups from a primary amino moiety and containing at least one hydroxyl group, (c) 2 to about 20% by weight of an amino acid which has the capability to increase the solubility of said diamino compounds in alkaline aqueous conditions at elevated temperatures, and (d) the balance, water.

10. An aqueous acid gas scrubbing composition according to claim 9 containing (a) 20 to 30% by weight of potassium carbonate, (b) 5 to about 15% by weight of N-(3-aminopropyl)-2-pipecoline or N-(2-hydroxyethyl)-N-(n-propyl)-1,4-butanediamine, (c) 5 to 10% by weight of pipecolinic acid, and (d) the balance, water.

**Patentansprüche**

1. Verfahren zur Entfernung von $CO_2$ aus einem $CO_2$ enthaltenden Gasstrom, dadurch gekennzeichnet, daß (1) in einer Absorptionsstufe $CO_2$ aus dem Gasstrom mit einer wässrigen Absorptionslösung absorbiert wird, die (a) ein basisches Alkalimetallsalz oder -hydroxid ausgewählt aus Alkalimetallbicarbonaten, -carbonaten, -hydroxiden, -boraten, -phosphaten und deren Mischungen und (b) ein Aktivator- oder Promotorsystem für das basische Alkalimetallsalz oder -hydroxid enthält, welches (i) mindestens eine nicht sterische gehinderte Diaminoverbindung, die definiert ist als ein Diamin, das sowohl eine primäre als auch eine tertiäre Aminogruppe enthält, wobei die primäre Aminogruppe an ein primäres Kohlenstoffatom gebunden ist, oder als ein Diaminoalkohol, der eine tertiäre, durch vier Methylengruppen von einer primären Aminogruppe getrennte Aminogruppe und mindestens eine Hydroxylgruppe enthält, und (ii) eine Aminosäure enthält, die in der Lage ist, die Löslichkeit der Diaminoverbindungen unter alkalischen wässrigen Bedingungen bei erhöhten Temperaturen zu erhöhen, und (2) in einer Desorptions- und Regenerationsstufe mindestens ein Teil des absorbierten $CO_2$ aus der Absorptionslösung desorbiert wird.

2. Verfahren nach Anspruch 1, dadurch gekennzeichnet, daß die wässrige Lösung 10 bis etwa 40 Gew.% des basischen Alkalimetallsalzes oder -hydroxids, 2 bis etwa 20 Gew.% der Diaminoverbindung und 2 bis etwa 20 Gew.% der Aminosäure enthält.

3. Verfahren nach Anspruch 1 oder 2, dadurch gekennzeichnet, daß die Aminosäure 4 bis 8 Kohlenstoffatome je Molekül besitzt und frei von jeglichen Hydroxylgruppen ist und entweder eine tertiäre Aminosäure, in der die Aminogruppe eine tertiäre Aminogruppe ist, oder eine sterisch gehinderte Aminosäure ist, die mindestens eine sekundäre aminogruppe gebunden entweder an ein sekundäres oder tertiäres Kohlenstoffatom oder eine primäre Aminogruppe gebunden an ein tetriäres Kohlenstoffatom enthält.

4. Verfahren nach einem der Ansprüche 1 bis 3, dadurch gekennziechnet, daß die Diaminoverbindung durch die folgenden allgemeinen Formeln wiedergegeben wird:

$$H_2N(CH_2)_nNRR' \quad \text{oder} \quad H_2N(CH_2)_nN(CH_2)_m,$$

in denen R und R' unabhängig eine $C_1$—$C_6$-Alkyl- oder eine $C_6$—$C_8$-Cycloalkylgruppe bedeuten, n eine ganze Zahl von mindestens 2 ist und m eine ganze Zahl von mindestens 4 ist.

5. Verfahren nach einem der Ansprüche 1 bis 3, dadurch gekennzeichnet, daß die Diaminoverbindung durch die folgende allgemeine Formel wiedergegeben wird:

$$H_2N—(CH_2)_4—NRR',$$

in der R und R' jeweils unabhängig voneinander eine $C_1$—$C_6$-Alkylgruppe bedeuten und entweder R oder R' oder beide eine endständige oder seitenständige Hydroxylgruppe aufweisen.

6. Verfahren nach einem der Ansprüche 1 bis 3, dadurch gekennzeichnet, daß die Aminosäure Pipecolinsäure oder N-sek.-Butylglycin ist, das basische Alkalimetallsalz oder -hydroxid Kaliumcarbonat ist und die Diaminoverbindung N-((3-Aminopropyl)-2-Pipecolin, N-(2-Aminoethyl)-hexamethylenimin, N-Methyl-N-cyclohexyl-1,3-propandiamin, N-Methyl-N-cyclohexylethylendiamin oder N-(2-Hydroxyethyl)-N-(n-propyl)-1,4-butandiamin ist.

7. Verfahren nach einem der Ansprüche 1 bis 6, dadurch gekennzeichnet, daß die Temperatur der Absorptionslösung während der Absorptionsstufe im Bereich von etwa 25 bis etwa 200°C liegt, der Druck in dem Absorber im Bereich von etwa 0,35 bis etwa 138 bar liegt und der Partialdruck der sauren Komponenten in dem Einsatzmaterialstrom im Bereich von etwa 0,07 bis etwa 0,35 bar liegt und daß die Temperatur der Absorptionslösung während der Regenerationsstufe im Bereich von etwa 25°C bis etwa 200°C liegt und die Drücke im Bereich von etwa 1,1 bis 7 bar liegen.

8. Verfahren nach einem der Ansprüche 1 bis 7, dadurch gekennzeichnet, daß die Absorptionslösung zusätzlich ein oder mehrere Antischaummittel, Antioxidationsmittel oder Korrosionsschutzmittel enthält.

9. Wässrige Wachlösung für saures Gas, gekennzeichnet durch (a) 10 bis etwa 40 Gew.% eines Alkalimetallsalzes oder -hydroxids, (b) 2 bis etwa 20 Gew.% einer nicht sterisch gehinderten Diaminoverbindung, die definiert ist als ein Diamin, das sowohl eine primäre als auch eine tertiäre Aminogruppe enthält, wobei die primäre Aminogruppe gebunden ist an ein primäres Kohlenstoffatom, oder als ein Diaminoalkohol, der eine tertiäre, durch vier Methylengruppen von einer primären Aminogruppe getrennte Aminogruppe und mindestens eine Hydroxylgruppe enthält, (c) 2 bis etwa 20 Gew.% einer Aminosäure, die in der Lage ist, die Löslichkeit der Diaminoverbindungen unter alkalischen wässrigen Bedingungen bie erhöhten Temperaturen zu erhöhen, und (d) als Rest Wasser.

10. Wässrige Waschlösung für saures Gas nach Anspruch 9, dadurch gekennzeichnet, daß sie (a) 20 bis 30 Gew.% Kaliumcarbonat, (b) 5 bis etwa 15 Gew.% N-(3-Aminopropyl)-2-pipecolin oder N-(2-Hydroxyethyl)-N-(n-propyl)-1,4-butandiamin, (c) 5 bis 10 Gew.% Pipecolinsäure und (d) im übrigen Wasser enthält.

**Revendications**

1. Un procédé pour l'élimination de $CO_2$ d'un courant gazeux contenant $CO_2$ dans lequel (1) dans une étape d'absorption, $CO_2$ est absorbé à partir de ce cournat gazeux par une solution absorbante aqueuse, comprenant (a) un sel basique ou un hydroxyde de métal alcalin choisi parmi les bicarbonates, carbonates, hydroxydes, borates, phosphates de métaux alcalins et leurs mélanges et (b) un système activant ou promoteur de ce sel basique ou de cet hydroxyde de métal alcalin, comprenant (i) au moins un composé diamino sans empêchement stérique, qui est défini comme étant une diamine contenant à la fois un fragment amino primaire et un fragment amino tertiaire, le fragment amino primaire étant fixé à un atome de carbone primaire, ou comme étant und diaminoalcool contenant un fragment amino tertiaire séparé par 4 groupes méthylène d'un fragment amino primaire et contenant au moins un groupe hydroxyle et (ii) un aminoacide qui est capable d'augmenter la solubilité de ces composés diamino en milieu aqueux alcalin, à température élevée, et (2) dans une étape de désorption et de régénération, au moins une portion du $CO_2$ absorbé est désorbée de ladite solution absorbante.

2. Un procédé selon la revendication 1, dans lequel la solution aqueuse contient 10 à environ 40% en poids de sel basique ou d'hydroxyde de métal alcalin, 2 à environ 20% en poids de composé diamino et 2 à environ 20% en poids d'aminoacide.

3. Un procédé selon la revendication 1 ou 2, dans lequel l'aminoacide a 4 à 8 atomes de carbone par molécule et ne comporte aucun groupe hydroxyle et est, soit un aminoacide tertiaire dans lequel le fragment amino est un fragment amino tertiaire, soit un aminoacide présentant un empêchement stérique contenant au moins un fragment amino secondaire fixé à un atome de carbone secondaire ou tertiaire ou un fragment amino primaire fixé à un atome de carbone tertiaire.

4. Un procédé selon l'une quelconque des revendications 1 à 3, dans lequel le composé diamino est représenté par les formules générales suivantes:

$$\underset{(I)}{H_2N(CH_2)_nNRR'} \quad \text{ou} \quad \underset{(II)}{H_2N(CH_2)_nN(CH_2)_m}$$

dans lesquelles R et R' représentent, indépendamment, un groupe alkyle en $C_1$—$C_6$ ou un groupe cycloalkyle en $C_6$—$C_8$, n est un nombre entier au moins égal à 2 et m est un nombre entier au moins égal à 4.

5. Un procédé selon l'une quelconque des revendications 1 à 3, dans lequel le composé diamino est représenté par la formule générale suivante

$$H_2N—(CH_2)_4—NRR' \qquad III$$

dans laquelle R et R' représentent chacun, indépendamment, un groupe alkyle en $C_1$—$C_6$ et soit R ou R', soit à la fois R et R' ont un groupe hydroxyle terminal ou fixé le long de la chaîne carbonée.

6. Un procédé selon l'une quelconque des revendications 1 à 3, dans lequel l'aminoacide est l'acide pipécolinique ou la N-secondaire-butyglycine, le sel basique ou l'hydroxyde de métal alcalin est le carbonate de potassium et le composé diamino est la N-(3-amino-propyl)-2 pipécoline, la N-(2-aminoéthyle)-hexaméthylèneimine, la N-méthyl-N-cyclohexyl-1-3-propanediamine, la N-méthyl-N-cyclohexyléthylènediamine ou la N-(2-hydroxyéthyl)-N-(n-propyl)-1-4-butanediamine.

7. Un procédé selon l'une quelconque des revendications 1 à 6, dans lequel la température de la solution absorbante pendant l'étape d'absorption est comprise entre environ 25° et enviroin 200°C, la pression dans l'absorbeur est comprise entre environ 0,35 et environ 138 bars (environ 5 et environ 2000 psia) et la pression partielle des constituants acides dans le courant d'alimentation est comprise entre environ 0,07 et environ 35 bars (environ 0,1 et environ 500 psia) et dans lequel la température de la solution absorbante pendant l'étape de régénération est comprise entre environ 25°C et environ 200°C, sous de pressions comprises entre environ 1,1 et 7 bars (environ 16 et 100 psia).

8. Un procédé selon l'une quelconque des revendications 1 à 7, dans lequel la solution absorbante comprend en outre un ou plusieurs agents anti-moussants, anti-oxydants ou inhibiteurs de corrosion.

9. Une composition pour le lavage des gaz acides comprenant (a) 10 à environ 40% en poids d'un sel ou d'un hydroxyde de métal alcalin, (b) 2 à environ 20% en poids d'un composé diamino sans empêchement stérique, qui est défini comme étant une diamine contenant à la fois un fragment amino primaire et un fragment amino tertiaire, le fragment amino primaire étant fixé à un atome de carbone primaire ou comme étant un diaminoalcool contenant un fragment amino tertiaire séparé par 4 groupes méthylène d'un fragment amino primaire et contenant au moins un groupe hydroxyle, (c) 2 à environ 20% en poids d'un aminoacide qui est capable d'augmenter la solubilité desdits composés diamino en milieu aqueux alcalin, à température élevée, et (d) le complément à 100% d'eau.

10. Une composition aqueuse de lavage des gaz acides selon la revendication 9, contenant (a) 20 à 30% en poids de carbonate de potassium, (b) 5 à environ 15% en poids de N-(3-aminopropyl)-2-pipécoline ou de N-(2-hydroxyéthyle) N-(n-propyl)-1-4 butanediamine, (c) 5 à 10% en poids d'acide pipécolinique et (d) le complément à 100% d'eau.

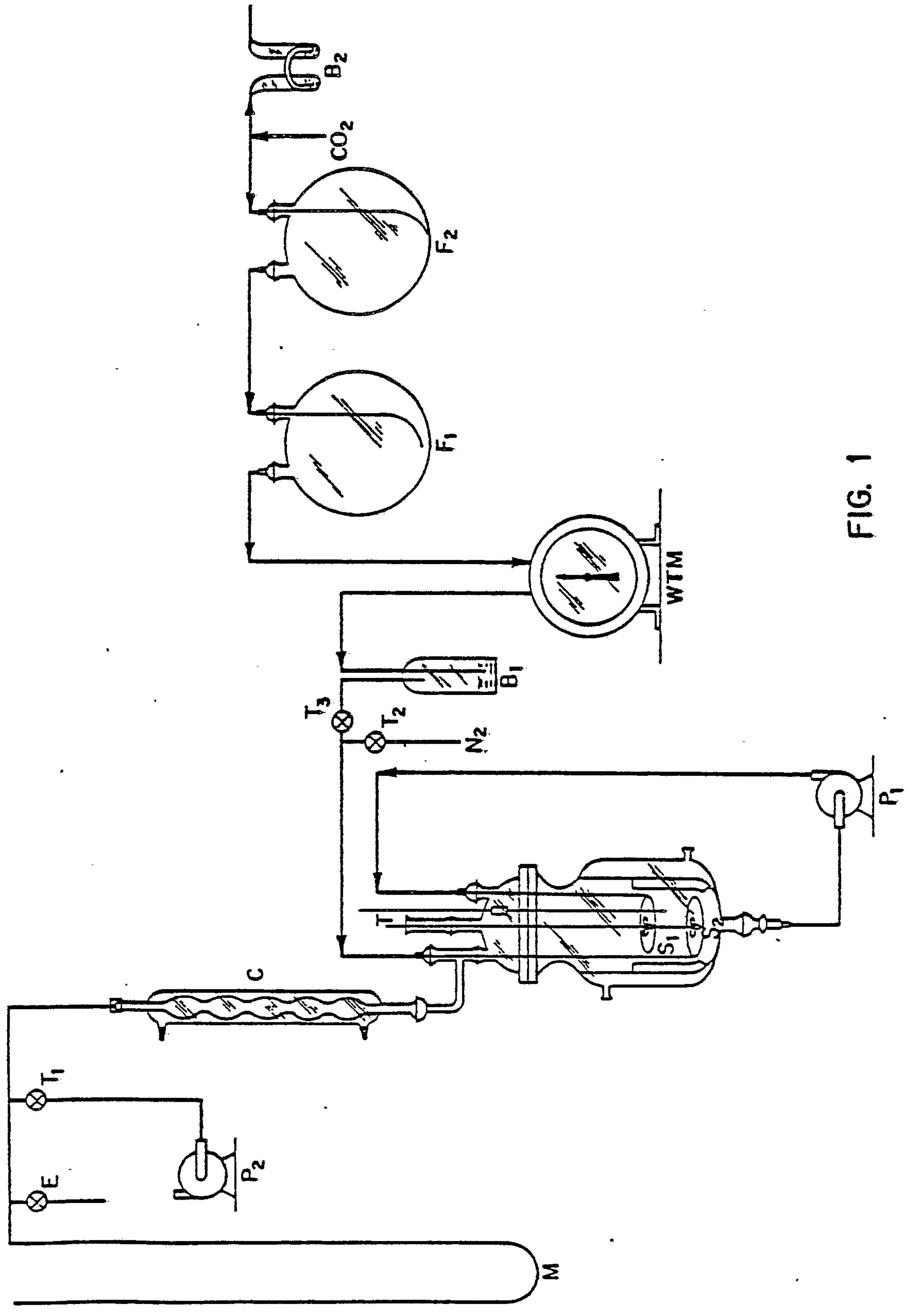


FIG. 1